# EUROPÄISCHE PATENTSCHRIFT

(11) **EP 0 560 732 B1**
(45) Veröffentlichungstag und Bekanntmachung des Hinweises auf die Patenterteilung: **17.05.1995**
(21) Anmeldenummer: 93810290.2
(22) Anmeldetag: 21.04.1993
(51) Int. Cl.: C09D 5/00, C09D 7/12, B05D 5/06

(54) **Verfahren zur Herstellung einer Reflexionslackschicht**
Process for preparing a layered reflective paint
Procédé pour préparer d'une couche de peinture réfléchissante

(43) Veröffentlichungstag der Anmeldung: 15.09.1993
(73) Patentinhaber: DR. A. SCHOCH AG, CH-3400 Burgdorf (CH)
(72) Erfinder: Frank, Niklaus, CH-3422 Kirchberg (CH)
(74) Vertreter: AMMANN PATENTANWAELTE AG BERN

(56) Entgegenhaltungen:
- CH-A- 269 842
- PATENT ABSTRACTS OF JAPAN, vol. 13, no. 24 (C-561), 26. September 1988; & JP-A-63 229 176
- PATENT ABSTRACTS OF JAPAN, vol. 11, no. 262 (C-442), 25. März 1987; & JP-A-62 065 769

## Beschreibung

Die vorliegende Erfindung bezieht sich auf ein Verfahren zur Herstellung eines reflektierenden Ueberzugs gemäss Oberbegriff von Patentanspruch 1.

Reflexionslacke werden eingesetzt, um Objekte unter schlechten Beleuchtungsverhältnissen besser sichtbar zu machen oder die Aufmerksamkeit auf sie zu richten. Besonders im Strassenverkehr haben sich Reflexionslackbeschichtungen bewährt, da sie zu einem ins Auge stechenden Aufleuchten führen, wenn z. B. das Licht eines Scheinwerfers darauf fällt.

Unter Reflexionslacken sind in der vorliegenden Beschreibung allgemein Lackschichten zu verstehen, die einfallendes Licht zu einem grossen Teil in etwa in Richtung des einfallenden Lichtstrahles reflektieren. Derartige Ueberzüge sind bekannt und enthalten transparente Mikrokugeln, in denen eine mehrfache Brechung des einfallenden Lichts auftritt und letztendlich ein gewisser Anteil in Richtung des einfallenden Lichts zurückgeworfen wird. Einen derartigen Lack beschreibt die EP-A-0 408 889. Der Lack besteht aus einem Binder, transparenten Mikrokugeln von mindestens 63 »m Durchmesser und einem geeigneten Lösungsmittel und wird als Aerosol aufgebracht. In Abwandlung davon beschreibt die EP-A-0 408 890 einen Zweikomponentenlack, wobei beide Komponenten als Aerosol auf das Substrat aufgebracht werden können. Die erste Komponente wirkt als Grundierung und ist im wesentlichen ein normaler Klarlack. Die zweite Komponente enthält transparente Mikrokugeln mit 45 »m bis 90 »m Durchmesser und einen flüchtigen Träger. Der Träger löst die Grundierung, das heisst die erste Komponente, an, wonach sich die Mikrokugeln mit der Grundierung verbinden können.

Zur Erhöhung des Reflexionsgrades wurden gemäss der EP-A-0 305 074 Mikrokugeln eingesetzt, die etwa zur Hälfte oberflächlich metallisiert sind. Eine andere Lösung bietet die US-3,228,897 mit einem Lack, der neben transparenten Mikrokugeln noch Metallflocken enthält.

Diese bekannten Reflexionslacke bieten jedoch in vielen Anwendungen immer noch zu geringe Reflexion. Ein Beispiel hierfür ist der Fahrradbau. Die bekannten Reflexionslacke ergaben als Rahmenlack keine ausreichende Reflexion, um den Einsatz spezieller, gesonderter Reflektoren überflüssig zu machen.

Schliesslich ist das Verfahren gemäss Oberbegriff von Patentanspruch 1 aus der JP-A-63 229 176 bekannt, wobei zuerst eine Untergrundschicht aus UV-härtbarem Lack für die reflektierende Metallschicht und darüber eine sehr dünne Schicht aus UV-härtbarem Lack für die Haftung der Glaskugeln aufgebracht wird, worauf die Glaskugeln gleichmässig aufgestreut werden und die Härtung durch Bestrahlen mit UV-Licht durchgeführt wird. Dann werden die Glaskugeln mit einer transparenten Lackschicht auf Urethanbasis abgedeckt.

Aufgabe der vorliegenden Erfindung ist ein Verfahren bereitzustellen, mit dem die Glaskugeln auch auf verwinkelten Oberflächen wie beispielsweise Fahrradrahmen einlagig aufgebracht werden können und das eine optimale Reflexion gewährleistet.

Ein Verfahren, das diese Aufgabe löst, ist in Anspruch 1 angegeben. Besondere Ausführungen sind Inhalt der weiteren Ansprüche.

Die erfindungsgemässe Anordnung der Mikrokugeln lässt sich allgemein so erzeugen, dass auf dem Substrat, das auf bekannte Art und Weise vorbehandelt ist, oder auf dem gemäss der zweiten, unten beschriebenen Massnahme vorbereiteten Untergrund eine erste, transparente Lackschicht aufgebracht wird. Der verwendete Lack wird so gewählt, dass er nur sehr langsam oder gar nicht unter Normalbedingungen aushärtet. Er enthält zusätzlich ein Lösungsmittel. Die Komposition wird so gewählt, dass nach teilweisem Verdunsten oder Verdampfen des Lösungsmittels eine klebrige Oberfläche entsteht, auf die die Mikrokugeln in einer deckenden Schicht aufgebracht werden. Je nach Art des Substrats kann dies durch Eintauchen, Uebergiessen, Aufsprühen, Aufstreuen usw. geschehen. Ueberflüssige, das heisst nicht mit der noch klebrigen Lackschicht in Kontakt stehende Mikrokugeln werden bevorzugt durch leichtes Klopfen, Schütteln oder ähnliche Massnahmen entfernt. Die Lackschicht wird ausgehärtet, wonach die Mikrokugeln auf dieser fixiert sind. Dann wird eine weitere transparente Lackschicht aufgebracht, die die Mikrokugeln vollständig abdeckt und aus dem gleichen Lack wie in der ersten Schicht besteht, und ausgehärtet. Durch diese zweite Lackschicht wird ein Schutz der Mikrokugeln bewirkt und eine glatte Oberfläche kann erzielt werden.

Die verwendeten Mikrokugeln bestehen bevorzugt aus Glas und haben einen Durchmesser von 10 »m bis 100 »m, bevorzugt von 40 »m bis 80 »m. Da das Aufbringen der Mikrokugeln getrennt von demjenigen des Klarlacks ist, können jedoch auch Mikrokugeln grösseren oder kleineren Durchmessers angewandt werden, im Gegensatz beispielsweise zu den bekannten Aerosollacken, bei denen die Sprüheinrichtungen eine obere Grenze für die Grösse der Mikrokugeln vorgeben. Der Brechungsindex der Mikrokugeln muss grösser sein als derjenige des umgebenden Klarlacks. Ein bevorzugter Wert des Brechungsindexes liegt im Bereich zwischen 1,5 und 2,5. Besonders bevorzugt ist der Bereich der Brechungsindices grösser 2.

Die zweite Massnahme besteht im wesentlichen darin, dass unter der die Mikrokugeln enthaltenden Klarlackschicht eine Oberfläche von metallischer Reflexionswirkung erzeugt wird. Dadurch wird auch Licht, das von den Mikrokugeln nicht über mehrfache Brechung reflektiert, sondern in Richtung des Substrats abgelenkt wird, von diesem in hohem Masse reflektiert und kann von den Mikrokugeln auch wieder in die grobe Richtung des einfallenden Lichts reflektiert werden. Diese Schicht kann überraschenderweise auf einfache Art durch einen beliebigen Metallack erzeugt werden. Derartige Metalllacke enthalten Metalleffektpigmente und/oder Metallflocken, z. B. aus Aluminium, die auch oberflächlich behandelt sein können (Bronzen), in einem geeigneten Binder dispergiert und sind als solche bekannt. Eine geläufige Bezeichnung für derartige Lacke ist auch Silberlack. Der Metallack wird auf den vorbereiteten, bevorzugt mit einer Rostschutzgrundierung versehenen Substrat durch eine gängige Technik aufgebracht und getrocknet. Darauf kann dann nach dem oben beschriebenen Verfahren die Klarlackschicht mit den Mikrokugeln aufgebracht werden.

Die Kombination beider Massnahmen, das heisst ein Lackaufbau aus einer metallisch reflektierenden Schicht und einer darüberliegenden Klarlackschicht mit einer geschlossenen, dichten und im wesentlichen einlagigen Schicht transparenter Mikrokugeln ergibt einen metallisch glänzenden Lack von auch durch blossen Augenschein deutlich erhöhter Reflexionskraft, da sich die beiden Effekte, die gleichmässigen Brechungseigenschaften der kontrolliert aufgebauten Mikrokugellage und die metallische Reflexionskraft des Untergrunds, gegenseitig verstärken.

In einer bevorzugten Ausführungsform werden Einbrennlacke unter Zusatz eines flüchtigen Lösungsmittels verwendet. Gute Ergebnisse wurden mit einer Alkyd-Melamin-Harzmischung erzielt. Die Härtung kann z. B. bei 120 °C bis 130 °C in ca. 20 Minuten erfolgen. Als Lösungsmittel kann neben den leichtflüchtigen bekannten organischen Lösungsmitteln auch Wasser Anwendung finden. Derartige Lacke bzw. Lackgrundkörper sind an sich in der Technik bekannt und bedürfen daher keiner weiteren Erläuterung. Es sind auch die bekannten lufttrocknenden oder wärmeforcierten Systeme anwendbar. Einkomponentige, lufttrocknende Systeme können z. B. auf Alkyd- oder Acrylatbasis aufgebaut oder vom Dispersionstyp sein. Bekannte zweikomponentige Systeme beinhalten Epoxide oder Urethane. Die Vortrocknung, die zur Ausbildung der klebrigen Oberfläche nötig ist, an der die Mikrokugeln haften können, kann auch als ein Zwischenstadium des Aushärtungs- oder Vernetzungsprozesses realisiert werden.

Die Aushärtung oder Trocknung des Binders erfolgt je nach Typ durch Vernetzen oder physikalisch während des Verdunstens des Lösungmittels, z. B. bei Dispersionslacken oder Nitrolacken. Die Art des Aushärtungssvorgangs kann im wesentlichen beliebig gewählt werden und auch umkehrbar sein wie im Falle eines Nitrolacks.

Die grundlegende Anforderung an die verwendeten Lacksysteme sind die gegenseitige Verträglichkeit aneinandergrenzender Schichten, dass eine Vortrocknung möglich ist, um eine Oberfläche zu erhalten, an der die Mikrokugeln haften, und eine nachfolgende vollständige Trocknung, um die Mikrokugeln auf der Oberfläche zu fixieren, damit eine zweite, transparente Lackschicht zum Abdecken der Mikrokugeln aufgebracht werden kann, ohne einen Verlust der Mikrokugeln durch Abfallen, Abstreifen o. ä. zu gewärtigen. Der Lack zum Einbetten der Mikrokugeln sollte auch verträglich mit diesen sein, insbesondere ihre optischen Eigenschaften nicht nachteilig verändern, wie z. B. trüben. Bei Mikrokugeln aus Glas ist eine derartige, nachteilige Wechselwirkung nahezu unbekannt. Im oben genannten Rahmen kann also frei ein Binder- bzw. Lacksystem gemäss der vorgesehen Anwendung gewählt werden.

Auf den erfindungsgemässen Klarlack können zur Farbgebung oder Oberflächengestaltung weitere Schichten, insbesondere Lackschichten, aufgebracht werden, soweit sie genügend lichtdurchlässig sind. Denkbar sind auch eine Einfärbung des transparenten Lacks, in den die Mikrokugeln eingebettet sind, oder auch eingefärbte Mikrokugeln. Auch eine Oberflächengestaltung ist denkbar, z. B. durch Einarbeiten von Vertiefungen, wodurch bereits eine Musterung durch verschiedenartige Lichtbrechung an der Oberfläche erzielt werden kann. Im Extremfall ist diese Musterung nur beim Aufleuchten des Objekts durch Reflexion sichtbar.

Möglich ist auch, zur Erzielung eines metallisch reflektierenden Untergrunds anstatt eines Lackauftrags das Substrat zu metallisieren, z. B. zu verchromen. Das Substrat kann auch nur poliert und/oder gestrahlt werden, um eine metallisch glänzende Oberfläche zu erhalten.

Anwendungen für den Reflexlack ergeben sich allgemein dort, wo schlecht oder gar nicht beleuchtete Objekte bei verminderter Helligkeit deutlich hervortreten sollen, wenn sie vom Strahl einer Lichtquelle erfasst werden. Ein bevorzugtes Anwendungsgebiet liegt im Strassenverkehr zur Markierung von Gefahrenstellen an Bauten oder Fahrzeugen im abgestellten Zustand, oder von Fahrzeugen, insbesondere von Fahrrädern mit und ohne Hilfsmotor und ähnlich schlecht beleuchteten und leicht übersehbaren, insbesondere zweirädrigen Fahrzeugen. Auch zur Erhöhung der Sicherheit von Personen können reflexlackbeschichtete und an der Kleidung getragene Artikel dienen, wobei insbesondere an Kinder zu denken ist. Dabei sind auch Anwendungen für Schutz- und Spezialbekleidung, (Schutz-)Helme und andere Zubehörartikel zu sehen, insbesondere auch wieder im Zweiradsektor (Fahrräder, Motorräder usw.).

Eine bevorzugte Anwendung soll im folgenden beispielhaft beschrieben werden.

Ein Fahrradrahmen wird auf bekannte Art vorbereitet und grundiert. Der Metall- oder Silberlack wird aufgesprüht und getrocknet. Die erste Transparentlackschicht, ein Alkyd-Melamin-Klarlack mit einem Lösungsmittelzusatz wird aufgebracht. Nach Verdunsten eines grossen Teils des Lösungsmittels wird der Rahmen mit Mikrokugeln übergossen, bis die Lackschicht vollständig mit den Mikrokugeln bedeckt ist, und durch leichte Schläge auf nicht mit Lack überzogene Stellen werden überschüssige Mikrokugeln abgeschüttelt. Die Mikrokugeln bestehen aus Glas mit einem Brechungsindex von 2,1 und haben Durchmesser im Bereich 40 »m bis 80 »m. Der Lack wird in der Wärme ausgehärtet, z. B. bei 120 °C bis 130 °C während ca. 20 Minuten. Die zweite Klarlackschicht aus demselben Lack wird aufgebracht und wie oben vollständig ausgehärtet. Die so erhaltene Reflexionslackschicht weist die erfindungsgemässe hohe Reflexionskraft auf und ist von metallisch glänzender Farbe. Nach Bedarf kann noch eine zusätzliche, eingefärbte Klarlackschicht aufgebracht werden und eine weitere Klarlackschicht zum Schutz gegen Umgebungseinflüsse.

## Patentansprüche

1. Verfahren zur Herstellung eines reflektierenden Überzugs auf einem Substrat und mit transparenten Mikrokugeln, die in einen transparenten Träger eingelagert sind, wobei der Brechungsindex des Trägers kleiner gewählt wird als derjenige der Mikrokugeln, im wesentlichen alle Mikrokugeln von der vom transparenten Träger gebildeten, einbettenden Schicht vollständig umschlossen werden und eine Kugelschicht bilden, und die einbettende Schicht über einem metallisch reflektierenden Untergrund aufgebracht wird, gekennzeichnet durch die folgenden Schritte:
- Aufbringen einer ersten, transparenten Schicht aus lösungsmittelhaltigem, thermisch härtbarem Lack auf dem Untergrund;
- Vortrocknen besagter ersten Lackschicht bis zur Ausbildung einer klebrigen Oberfläche, an der die zur Anwendung kommenden Mikrokugeln haften, durch Verdunsten oder Abdampfen des im Lack enthaltenen Lösungsmittels;
- Aufbringen einer im wesentlichen geschlossenen einlagigen Schicht von transparenten Mikrokugeln auf die erste Lackschicht;
- Mechanisches Entfernen von weitgehend allen, nicht mit der ersten Lackschicht in Kontakt stehenden Mikrokugeln;
- Aushärten der ersten Lackschicht durch Erwärmen;
- Aufbringen einer zweiten, transparenten Lackschicht, die die Mikrokugeln abdeckt, wobei im wesentlichen der gleiche Lack wie für die erste Lackschicht verwendet wird; und
- Aushärten der zweiten Lackschicht durch Erwärmen;
wobei die erste und die zweite Lackschicht zusammen die einbettende Lackschicht bilden.

2. Verfahren gemäss Anspruch 1, dadurch gekennzeichnet, dass als Binder im lösungsmittelhaltigen, thermisch härtbaren Lack ein vernetzbares Harz verwandt wird, und zwar insbesondere von einem der folgenden Typen oder einer Mischform davon: Alkyd, Melamin, Alkyd-Melamin, Acrylat, Epoxid, Urethan.

3. Verfahren gemäss einem der Ansprüche 1 bis 2, dadurch gekennzeichnet, dass Mikrokugeln verwendet werden, die aus Glas bestehen, einen Brechungsindex im Bereich von 1,5 bis 2,5 und bevorzugt grösser 2 aufweisen und einen Durchmesser von 10 »m bis 100 »m und bevorzugt von 40 »m bis 80 »m aufweisen.

4. Verfahren gemäss einem der Ansprüche 1 bis 3, dadurch gekennzeichnet, dass die Mikrokugeln auf die vorgetrocknete erste Lackschicht durch Eintauchen, Aufsprühen oder Aufstreuen aufgebracht werden, und Mikrokugeln ohne Kontakt zur Lackschicht durch Schütteln zum grössten Teil entfernt werden.

5. Verfahren gemäss Anspruch 1, dadurch gekennzeichnet, dass das Aushärten durch Einbrennen oberhalb 100 °C erfolgt.

6. Überzug, hergestellt nach dem Verfahren gemäss einem der Ansprüche 1 bis 5.

7. Verwendung des Überzugs gemäss Anspruch 6 für die Lackierung von Fahrzeugen oder Fahrzeugteilen, insbesondere von Fahrrädern mit und ohne Hilfsmotor.

8. Verwendung des Überzugs gemäss Anspruch 6 für Zeichen im Aussenbereich, insbesondere Verkehrszeichen.

## Claims

1. Process for the manufacture of a reflective coating containing transparent microspheres embedded in a carrier on a substrate, the refractive index of the carrier being selected lower than that of the microspheres, essentially all microspheres being completely surrounded by the embedding layer formed by the transparent carrier and forming a sphere layer, and the embedding layer being applied on a base with metallic reflection, characterised by the following steps:
- application of a first, transparent layer of a solvent containing heat curing varnish onto the base;
- pre-drying of said first varnish layer until the formation of a tacky surface on which the microspheres to be utilised will adhere, by vaporising the solvent contained in the varnish or allowing it to evaporate;
- application of a monolayer essentially tight of transparent microspheres on the first varnish layer;
- mechanical removal of substantially all of the microspheres not being in contact with the first varnish layer;
- curing of the first varnish layer by heating;
- application of a second transparent varnish layer which covers the microspheres, essentially the same varnish being used as that of the first varnish layer; and
- curing of the second varnish layer by heating,
the first and the second varnish layer forming together the embedding varnish layer.

2. Process according to claim 1, characterised in that a cross-linking resin is used as a binder in the solvent containing and heat curing varnish, namely in particular selected from one of the following types or their mixtures: alkyd, melamine, alkyd-melamine, acrylate, epoxide, urethane.

3. Process according to claim 1 or 2, characterised in that microspheres are used which consist of glass, having a refractive index of from 1.5 to 2.5 and preferably greater than 2, and a diameter of from 10 »m to 100 »m and preferably from 40 »m to 80 »m.

4. Process according to any one of claims 1 to 3, characterised in that the microspheres are applied to the pre-dried first varnish layer by dipping, spraying or scattering, and that most of the microspheres without contact to the varnish layer are removed by shaking.

5. Process according to claim 1, characterised in that the curing is operated by heating above 100 °C.

6. Coating, produced by the process of any one of claims 1 to 5.

7. Use of the coating according to claim 6 for the enamelling of vehicles or vehicle parts, in particular of bicycles with or without auxiliary engine.

8. Use of the coating according to claim 6 for outdoor signs, particularly traffic signs.

## Revendications

1. Procédé de fabrication d'un revêtement réfléchissant sur un substrat et comprenant des microsphères transparentes noyées dans un support transparent, l'indice de réfraction du support étant choisi pour être plus petit que celui des microsphères, substantiellement toutes les microsphères étant enrobées par la couche d'enrobage formée par le support transparent et formant une couche de sphères, et la couche d'enrobage étant appliquée sur un fond métalliquement réfléchissant, caractérisé par les étapes suivantes:
- application sur le fond d'une première couche transparente composée d'un vernis thermiquement durcissable contenant un solvant;
- pré-sèchage de la dite première couche de vernis jusqu'à la formation d'une surface collante à laquelle adhèrent les microsphères à utiliser, en vaporisant ou en laissant s'évaporer le solvant contenu dans le vernis;
- application d'une monocouche de microsphères transparentes essentiellement refermée sur la première couche de vernis;
- enlèvement mécanique de sensiblement toutes les microsphères qui ne sont pas en contact avec la première couche de vernis;
- durcissement de la première couche de vernis par chauffage;
- application d'une seconde couche de vernis transparente recouvrant les microsphères, essentiellement le même vernis que celui de la première couche de vernis étant utilisé; et
- durcissement par chauffage de la seconde couche de vernis;
les première et seconde couche de vernis formant ensemble la couche de vernis d'enrobage.

2. Procédé selon la revendication 1, caractérisé en ce qu'on utilise comme liant dans le vernis à durcissement thermique contenant du solvant, une résine réticulable, à savoir choisie en particulier parmi les classes suivantes et leurs mélanges: alkyde, mélamine, alkyde-mélamine, acrylate, époxyde, uréthane.

3. Procédé selon l'une des revendications 1 et 2, caractérisé en ce qu'on utilise des microsphères consistant en verre, ayant un indice de réfraction compris entre 1,5 et 2,5 et de préférence plus grand que 2, et présentant un diamètre compris entre 10 »m et 100 »m et de préférence entre 40 »m et 80 »m.

4. Procédé selon l'une des revendications 1 à 3, caractérisé en ce que les microsphères sont appliquées sur la première couche de vernis pré-séchée par immersion, giclement or saupoudrage, et que les microsphères n'étant pas en contact avec la couche de vernis sont enlevées pour la plupart par secousses.

5. Procédé selon la revendication 1, caractérisé en ce que le durcissement est effectué par chauffage au-dessus de 100 °C.

6. Revêtement, fabriqué par le procédé selon l'une des revendications 1 à 5.

7. Utilisation du revêtement selon la revendication 6 pour la peinture de véhicules ou de leurs parts, en particulier de bicyclettes avec ou sans moteur auxiliaire.

8. Utilisation du revêtement selon la revendication 6 pour des signaux à l'extérieur, en particulier pour la signalisation routière.
